# EUROPEAN PATENT APPLICATION

(11) **EP 4 276 513 A1**
(43) Date of publication of application: **15.11.2023**
(21) Application number: 23168384.8
(22) Date of filing: 18.04.2023
(51) Int. Cl.: G02B 27/00, G02B 27/01

(54) **COMPACT HEAD-UP DISPLAY AND WAVEGUIDE THEREFOR**

(30) Priority: 10.05.2022 GB 202206791
(71) Applicant: Envisics Ltd., Milton Keynes MK1 1PT (GB)
(72) Inventor: MAHARJAN, Rakesh, Milton Keynes, MK1 1PT (GB); COLE, Alexander, Milton Keynes, MK1 1PT (GB); COLLINGS, Neil, Milton Keynes, MK1 1PT (GB); SMEETON, Timothy, Milton Keynes, MK1 1PT (GB); KRAWCZYK, Celedonia, Milton Keynes, MK1 1PT (GB)
(74) Representative: Greenaway, Martin William

(57) **Abstract**

A pupil expander for a head-up display. The head-up display has an eye-box having a first dimension and second dimension. The pupil expander comprises a pair of first waveguides each arranged to replicate a pupil in the first dimension of the eye-box. Each waveguide is elongated and tapered in the direction of elongation such that its input end is narrower than its output end. The first waveguides are arranged so that their input ends are substantially proximate each other and their respective output ends are substantially distal from each other.

## Description

### FIELD

The present disclosure relates to pupil expansion or replication, in particular, for a diffracted light field comprising diverging ray bundles. More specifically, the present disclosure relates a display system comprising a waveguide pupil expander and to a method of pupil expansion using a waveguide. Some embodiments relate to two-dimensional pupil expansion. Some embodiments relate to a picture generating unit and a head-up display, for example an automotive head-up display (HUD).

### BACKGROUND AND INTRODUCTION

Light scattered from an object contains both amplitude and phase information. This amplitude and phase information can be captured on, for example, a photosensitive plate by well-known interference techniques to form a holographic recording, or "hologram", comprising interference fringes. The hologram may be reconstructed by illumination with suitable light to form a two-dimensional or three-dimensional holographic reconstruction, or replay image, representative of the original object.

Computer-generated holography may numerically simulate the interference process. A computer-generated hologram may be calculated by a technique based on a mathematical transformation such as a Fresnel or Fourier transform. These types of holograms may be referred to as Fresnel/Fourier transform holograms or simply Fresnel/Fourier holograms. A Fourier hologram may be considered a Fourier domain/plane representation of the object or a frequency domain/plane representation of the object. A computer-generated hologram may also be calculated by coherent ray tracing or a point cloud technique, for example.

A computer-generated hologram may be encoded on a spatial light modulator arranged to modulate the amplitude and/or phase of incident light. Light modulation may be achieved using electrically-addressable liquid crystals, optically-addressable liquid crystals or micro-mirrors, for example.

A spatial light modulator typically comprises a plurality of individually-addressable pixels which may also be referred to as cells or elements. The light modulation scheme may be binary, multilevel or continuous. Alternatively, the device may be continuous (i.e. is not comprised of pixels) and light modulation may therefore be continuous across the device. The spatial light modulator may be reflective meaning that modulated light is output in reflection. The spatial light modulator may equally be transmissive meaning that modulated light is output in transmission.

A holographic projector may be provided using the system described herein. Such projectors have found application in head-up displays, "HUD".

### SUMMARY

Aspects of the present disclosure are defined in the appended independent claims.

Broadly, the present disclosure relates to image projection. It relates to a method of image projection and an image projector which comprises a display device. The present disclosure also relates to a projection system comprising the image projector and a viewing system, in which the image projector projects or relays light from the display device to the viewing system. The present disclosure is equally applicable to a monocular and binocular viewing system. The viewing system may comprise a viewer's eye or eyes. The viewing system comprises an optical element having optical power (e.g., lens/es of the human eye) and a viewing plane (e.g., retina of the human eye/s). The projector may be referred to as a 'light engine'. The display device and the image formed (or perceived) using the display device are spatially separated from one another. The image is formed, or perceived by a viewer, on a display plane. In some embodiments, the image is a virtual image and the display plane may be referred to as a virtual image plane. In other embodiments, the image is a real image formed by holographic reconstruction and the image is projected or relayed to the viewing plane. The image is formed by illuminating a diffractive pattern (e.g., hologram) displayed on the display device.

The display device comprises pixels. The pixels of the display may display a diffractive pattern or structure that diffracts light. The diffracted light may form an image at a plane spatially separated from the display device. In accordance with well-understood optics, the magnitude of the maximum diffraction angle is determined by the size of the pixels and other factors such as the wavelength of the light.

In embodiments, the display device is a spatial light modulator such as liquid crystal on silicon ("LCOS") spatial light modulator (SLM). Light propagates over a range of diffraction angles (for example, from zero to the maximum diffractive angle) from the LCOS, towards a viewing entity/system such as a camera or an eye. In some embodiments, magnification techniques may be used to increase the range of available diffraction angles beyond the conventional maximum diffraction angle of an LCOS.

In some examples, an image (formed from the displayed hologram) is propagated to the eyes. For example, spatially modulated light of an intermediate holographic reconstruction / image formed either in free space or on a screen or other light receiving surface between the display device and the viewer, may be propagated to the viewer.

In some other examples, the (light of a) hologram itself is propagated to the eyes. For example, spatially modulated light of the hologram (that has not yet been fully transformed to a holographic reconstruction, i.e. image) - that may be informally said to be "encoded" with/by the hologram - is propagated directly to the viewer's eyes. A real or virtual image may be perceived by the viewer. In these embodiments, there is no intermediate holographic reconstruction / image formed between the display device and the viewer. It is sometimes said that, in these embodiments, the lens of the eye performs a hologram-to-image conversion or transform. The projection system, or light engine, may be configured so that the viewer effectively looks directly at the display device.

Reference is made herein to a "light field" which is a "complex light field". The term "light field" merely indicates a pattern of light having a finite size in at least two orthogonal spatial directions, e.g. x and y. The word "complex" is used herein merely to indicate that the light at each point in the light field may be defined by an amplitude value and a phase value, and may therefore be represented by a complex number or a pair of values. For the purpose of hologram calculation, the complex light field may be a two-dimensional array of complex numbers, wherein the complex numbers define the light intensity and phase at a plurality of discrete locations within the light field.

In accordance with the principles of well-understood optics, the range of angles of light propagating from a display device that can be viewed, by an eye or other viewing entity/system, varies with the distance between the display device and the viewing entity. At a 1 meter viewing distance, for example, only a small range of angles from an LCOS can propagate through an eye's pupil to form an image at the retina for a given eye position. The range of angles of light rays that are propagated from the display device, which can successfully propagate through an eye's pupil to form an image at the retina for a given eye position, determines the portion of the image that is 'visible' to the viewer. In other words, not all parts of the image are visible from any one point on the viewing plane (e.g., any one eye position within a viewing window such as eye-motion box.)

In some embodiments, the image perceived by a viewer is a virtual image that appears upstream of the display device - that is, the viewer perceives the image as being further away from them than the display device. Conceptually, it may therefore be considered that the viewer is looking at a virtual image through an 'display device-sized window', which may be very small, for example 1cm in diameter, at a relatively large distance, e.g., 1 meter. And the user will be viewing the display device-sized window via the pupil(s) of their eye(s), which can also be very small. Accordingly, the field of view becomes small and the specific angular range that can be seen depends heavily on the eye position, at any given time.

A pupil expander addresses the problem of how to increase the range of angles of light rays that are propagated from the display device that can successfully propagate through an eye's pupil to form an image. The display device is generally (in relative terms) small and the projection distance is (in relative terms) large. In some embodiments, the projection distance is at least one - such as, at least two - orders of magnitude greater than the diameter, or width, of the entrance pupil and/or aperture of the display device (i.e., size of the array of pixels). Embodiments of the present disclosure relate to a configuration in which a hologram of an image is propagated to the human eye rather than the image itself. In other words, the light received by the viewer is modulated according to a hologram of the image. However, other embodiments of the present disclosure may relate to configurations in which the image is propagated to the human eye rather than the hologram - for example, by so called indirect view, in which light of a holographic reconstruction or "replay image" formed on a screen (or even in free space) is propagated to the human eye.

Use of a pupil expander increases the viewing area (i.e., user's eye-box) laterally, thus enabling some movement of the eye/s to occur, whilst still enabling the user to see the image. As the skilled person will appreciate, in an imaging system, the viewing area (user's eye box) is the area in which a viewer's eyes can perceive the image. The present disclosure relates to non-infinite virtual image distances - that is, near-field virtual images.

Conventionally, a two-dimensional pupil expander comprises one or more one-dimensional optical waveguides each formed using a pair of opposing reflective surfaces, in which the output light from a surface forms a viewing window - e.g., eye-box or eye motion box for viewing by the viewer. Light received from the display device (e.g., spatially modulated light from a LCOS) is replicated by the or each waveguide so as to increase the field of view (or viewing area) in at least one dimension. In particular, the waveguide enlarges the viewing window due to the generation of extra rays or "replicas" by division of amplitude of the incident wavefront.

The display device may have an active or display area having a first dimension that may be less than 10 cms such as less than 5 cms or less than 2 cms. The propagation distance between the display device and viewing system may be greater than 1 m such as greater than 1.5 m or greater than 2 m. The optical propagation distance within the waveguide may be up to 2 m such as up to 1.5 m or up to 1 m. The method may be capable of receiving an image and determining a corresponding hologram of sufficient quality in less than 20 ms such as less than 15 ms or less than 10 ms.

In some embodiments - described only by way of example of a diffracted or holographic light field in accordance with this disclosure - a hologram is configured to route light into a plurality of channels, each channel corresponding to a different part (i.e. sub-area) of an image. The hologram may be represented, such as displayed, on a display device such as a spatial light modulator. When displayed on an appropriate display device, the hologram may spatially modulate light transformable by a viewing system into the image. The channels formed by the diffractive structure are referred to herein as "hologram channels" merely to reflect that they are channels of light encoded by the hologram with image information. It may be said that the light of each channel is in the hologram domain rather than the image or spatial domain. In some embodiments, the hologram is a Fourier or Fourier transform hologram and the hologram domain is therefore the Fourier or frequency domain. The hologram may equally be a Fresnel or Fresnel transform hologram. The hologram is described herein as routing light into a plurality of hologram channels merely to reflect that the image that can be reconstructed from the hologram has a finite size and can be arbitrarily divided into a plurality of image sub-areas, wherein each hologram channel would correspond to each image sub-area. Importantly, the hologram of this example is characterised by how it distributes the image content when illuminated. Specifically, the hologram divides the image content by angle. That is, each point on the image is associated with a unique light ray angle in the spatially modulated light formed by the hologram when illuminated - at least, a unique pair of angles because the hologram is two-dimensional. For the avoidance of doubt, this hologram behaviour is not conventional. The spatially modulated light formed by this special type of hologram, when illuminated, may be arbitrarily divided into a plurality of hologram channels, wherein each hologram channel is defined by a range of light ray angles (in two-dimensions). It will be understood from the foregoing that any hologram channel (i.e. sub-range of light ray angles) that may be considered in the spatially modulated light will be associated with a respective part or sub-area of the image. That is, all the information needed to reconstruct that part or sub-area of the image is contained within a sub-range of angles of the spatially modulated light formed from the hologram of the image. When the spatially modulated light is observed as a whole, there is not necessarily any evidence of a plurality of discrete light channels. However, in some arrangements, a plurality of spatially separated hologram channels is formed by intentionally leaving areas of the target image, from which the hologram is calculated, blank or empty (i.e., no image content is present).

Nevertheless, the hologram may still be identified. For example, if only a continuous part or sub-area of the spatially modulated light formed by the hologram is reconstructed, only a sub-area of the image should be visible. If a different, continuous part or sub-area of the spatially modulated light is reconstructed, a different sub-area of the image should be visible. A further identifying feature of this type of hologram is that the shape of the cross-sectional area of any hologram channel substantially corresponds to (i.e. is substantially the same as) the shape of the entrance pupil although the size may be different - at least, at the correct plane for which the hologram was calculated. Each light / hologram channel propagates from the hologram at a different angle or range of angles. Whilst these are example ways of characterising or identifying this type of hologram, other ways may be used. In summary, the hologram disclosed herein is characterised and identifiable by how the image content is distributed within light encoded by the hologram. Again, for the avoidance of any doubt, reference herein to a hologram configured to direct light or angularly-divide an image into a plurality of hologram channels is made by way of example only and the present disclosure is equally applicable to pupil expansion of any type of holographic light field or even any type of diffractive or diffracted light field.

The system can be provided in a compact and streamlined physical form. This enables the system to be suitable for a broad range of real-world applications, including those for which space is limited and real-estate value is high. For example, it may be implemented in a head-up display (HUD) such as a vehicle or automotive HUD.

In accordance with the present disclosure, pupil expansion is provided for diffracted or diffractive light, which may comprise diverging ray bundles. The diffractive or diffracted light may be output by a display device such as a pixelated display device such as a spatial light modulator (SLM) arranged to display a diffractive structure such as a hologram. The diffracted light field may be defined by a "light cone". Thus, the size of the diffracted light field (as defined on a two-dimensional plane) increases with propagation distance from the corresponding diffractive structure (i.e. display device).

The spatial light modulator may be arranged to display a hologram. The diffracted or diverging light may comprise light encoded with/by the hologram, as opposed to being light of an image or of a holographic reconstruction. In such embodiments, it can therefore be said that the pupil expander replicates the hologram or forms at least one replica of the hologram, to convey that the light delivered to the viewer is spatially modulated in accordance with a hologram of an image, not the image itself. That is, a diffracted light field is propagated to the viewer.

In some embodiments, two one-dimensional waveguide pupil expanders are provided, each one-dimensional waveguide pupil expander being arranged to effectively increase the size of the exit pupil of the system by forming a plurality of replicas or copies of the exit pupil (or light of the exit pupil) of the spatial light modulator. The exit pupil may be understood to be the physical area from which light is output by the system. It may also be said that each waveguide pupil expander is arranged to expand the size of the exit pupil of the system. It may also be said that each waveguide pupil expander is arranged to expand/increase the size of the eye box within which a viewer's eye can be located, in order to see/receive light that is output by the system.

There is provided a pupil expander for a head-up display. The head-up display has an eye-box having a first dimension (e.g. horizontal or x dimension) and second dimension (e.g. vertical or y dimension). The pupil expander comprises a pair of first waveguides each arranged to replicate a pupil in the first dimension of the eye-box. Each waveguide is elongated and tapered in the direction of elongation such that its first/input end is narrower than its second/output end. The waveguides are arranged so that their first/input ends are substantially proximate each other and their respective second/output ends are substantially distal from each other.

Each first waveguide of the pair of first waveguides may comprise a pair of reflective surfaces. The pair of reflective surfaces may comprise a first surface. At least a portion of the first surface may be substantially reflective. The first surface may comprise an input port at or towards the input end. The pair of reflective surface may comprise a second surface. At least a portion of the second surface may be partially reflective-transmissive. The second surface may comprise an output port. The partially reflective-transmissive portion of the second surface may form or comprise the output port. The pair of surfaces may be arranged such that input light may be received at the input port. The pair of surfaces may be arranged to provide waveguiding of the input light therebetween. The second surface may be arranged such that replicas of the input light are emitted by the second surface, for example by the partially reflective-transmissive portion. In some embodiments, the first surface may be parallel to the second surface. In other words, the pair of surfaces that are arranged to provide waveguiding of input light therebetween may be parallel. This may advantageously mean that replicas of the input light emitted by the second surface are emitted at the same angle to one another.

In other words, each first waveguide may comprise a pair of reflective surfaces comprising a first substantially reflective surface and a second partially reflective-transmissive surface, arranged to provide waveguiding of input light therebetween. The pair of reflective surfaces may be parallel.

Input light to a waveguide pupil expander or replicator may comprises a diverging light field, for example a diffracted light field comprising diverging ray bundles, as described herein. In consequence, the size of the light field increases with propagation distance along the light propagation path through the waveguide. It may be said that the light field expands or increases in cross sectional area with propagation distance due to the diverging ray bundles. Furthermore, since the propagation distance increases along the length of the waveguide from the first/input end to the second/output end, the size of the light field also increases with each "bounce" (i.e. "replica" of the input beam/pupil). [It may be said that the cross sectional area of the light field increases as it subtends an increasing angle with propagation distance along the length of the waveguide.] In order to accommodate this increasing size of the light field, the inventors have found that, when using a single waveguide to provide pupil expansion in a first dimension, the width of each of the parallel reflective surfaces of the waveguide (e.g. corresponding to the waveguide "height" in the second dimension) should increase along the length of the waveguide - from an input end to an output end. This ensures that the replicas formed at all positions along the length of the waveguide meet the field of view requirement (e.g. 5 degrees) in the second dimension. However, this may lead to a considerable increase in the size/height of the waveguide in the second dimension, and thus the overall size/height of the two-dimensional pupil expander, so that the resulting arrangement is too bulky, and so occupies too much space, for application requirements.

There is disclosed herein a pair of first waveguides for providing pupil expansion in a first dimension. The waveguides are elongate and tapered along their length - broadly corresponding to the direction of pupil expansion or replication - such that the first/input end of each waveguide is narrower than the second/output end thereof. The waveguides are arranged so that their first/input ends are substantially proximate each other and their respective second/output ends are substantially distal from each other. Since the pupil expansion in the first dimension is provided by a pair of first waveguides instead of a single waveguide, the length of each waveguide is less that the length a single waveguide providing the same pupil expansion in the first dimension. Thus, the size/height of the pupil expander in the second dimension may be reduced so as to provide a more compact arrangement.

As described above, each first waveguide comprises a pair of surface between which input light is waveguided. These surfaces may be referred to as the waveguiding surfaces. The width of each of the waveguiding surfaces may increase along the length of the respective waveguide. As above, the length may be defined from the input end to the output end. The width may be a dimension that is substantially perpendicular to the length. It may be the increasing width of the waveguiding surfaces that results in the tapering of the first waveguides. In particular, when the pair of (waveguiding) surfaces are parallel (as above) it may be the increasing width of the waveguiding surfaces that results in the first waveguides having a tapered shape. The width of the pair of (waveguiding) surfaces may at least double from the input end to the output end. Input light waveguided by the pair of (waveguiding) surfaces may be incident on each of the pair of surfaces a plurality of times as the input light is waveguided from the input end to the output end. The input light may be diverging input light having a light field that increases with propagation distance. The pair of first waveguides may advantageously be arranged such that the increasing width of the pair of (waveguiding) surfaces ensures that the light field size does not exceed the width of the respective (waveguiding) surface along the length of the first waveguide. In other words, the tapered shape / width of the pair of (waveguiding) surfaces may compensate for the increasing light field of diverging input light.

Each first waveguide may be in the form of a tapered block or slab. The tapered block or slab may comprise a pair of opposing parallel surfaces and a pair of opposing non-parallel surfaces. Each of the pair of non-parallel surfaces may be orthogonal to surfaces of the pair of parallel surfaces. A separation between the pair of parallel surfaces may be constant along the length of the first waveguide. A separation between the pair of non-parallel surface may increase along the length of the respective first waveguide from the input port to the output port. The pair of non-parallel surfaces may be sidewalls. The pair of opposing side-walls of each first waveguide may be non-waveguiding (in other words, the pair of opposing side-walls may not be arranged to waveguide input light therebetween). This may be a result of the width of the pair of (waveguiding) surfaces increasing along the length of the respective first waveguide from the input end to the output end. The width and / or length of each of the opposing side-walls may be substantially constant.

In embodiments, the waveguides of the pair of first waveguides are arranged to provide pupil expansion in opposite directions of the first dimension (e.g. +x and -x respectively). It may be said that the light propagation paths through the first waveguides are in opposite directions of the first dimension. Thus, the first waveguides form replicas of the pupil (i.e., pupil expand or replicate) in opposite directions of the first dimension.

As described above, the head-up display has an eye-box. This may be a single eye-box. The eye-box may be for receiving a pair of eyes of a user. The pair of first waveguides are each arranged to replicate a pupil in the first dimension of the eye-box. In other words, the pair of first waveguides are each arranged to contribute to the expansion of the (single) eye-box in a first dimension of the eye-box. The pair of first waveguides may be arranged to emit a plurality of replicas of the input light. The plurality of replicas may comprise a first subset and a second subset. The first subset of the plurality of replicas may be emitted by a first waveguide of the pair of first waveguides. The second subset of the plurality of replicas may be emitted by a second first waveguide of the pair of first waveguides. The pair of first waveguides may be arranged such that each of the plurality of replicas contribute to the eye-box.

The (single) eye-box may be a substantially continuous eye-box. As used herein, the (single) eye-box being substantially continuous means that a viewing system (such as the pupil of a user's eye) may be positioned at substantially any position within a (single) continuous portion of a plane defined in space and receive one or more replicas of the input light. For example, the first subset of replicas may contribute to a first (e.g. left) portion of the eye-box and the second subset of replicas may contribute to a second (e.g. right) portion of the eye-box. The first and second portions of the eye-box may abut or adjoin one another. The first and second portions of the eye-box may be adjacent one another. In other words, the first waveguides are both arranged to expand the (single, continuous) eye-box of the head-up display in the first dimension. The (single) eye-box may be arranged to contain both of a user's eyes.

The provision of a pair of first waveguides each contributing to the expansion of a single eye-box (in a first dimension) is unconventional. As described herein, the inventors have found that this arrangement allows for the creation of a relatively large expanded eye-box while maintain a relatively compact pupil expander. The provision of a pair of first waveguides each contributing to the expansion of a single eye-box (in a first dimension) is different to head-mounted type devices which direct different output light to different eyes of a user. Such head-mounted devices may comprise a first waveguide arranged to output light to a user's left eye and a second waveguide arranged to output light a user's right eye. This does not result in the creation of a single eye-box formed by light emitted from a two waveguides. Instead, two spatially separated viewing windows may be formed, one for the left eye and one for the right eye. The arrangement of first waveguides may allow for a relatively much larger (single) eye-box than is created (or needed) in a head-mounted device. For example, the relatively large eye-box may allow for substantial movement of a user's (driver's) head relative to the pupil expander while their head is maintained in the eye-box. This is not necessary in a head-mounted device where there is substantially no relative motion between the device and the user's head.

In some embodiments, each waveguide of the pair of first waveguides is substantially the same length. In such arrangements, each waveguide may be arranged to form approximately half the required number of replicas in the first dimension. In consequence, the length of each first waveguide is approximately half the length of a single waveguide arranged to form the same number of replicas in the first dimension. In some examples, the waveguides of the pair of first waveguides are arranged in a substantially symmetrical configuration. This enables the same component to be used for both waveguides of the pair of first waveguides, with the orientation of one first waveguide flipped with respect to the other first waveguide. In some embodiments, the symmetrical configuration may be a V-shaped configuration.

In embodiments, the waveguides of the pair of first waveguides are arranged in a substantially planar configuration. The planar configuration further assists in providing a more compact arrangement. In examples, the substantially planar configuration is in the plane of propagation of the pupil replicas formed by the pair of first waveguides.

In some embodiments, the waveguides of the pair of first waveguides are arranged in a configuration in which they are tapered in the same direction.

In some arrangements, the first/input ends of the pair of first waveguides partially overlap in the first dimension. Thus, the array of replicas output by one first waveguide partially overlaps the array of replicas output by the other first waveguide in the first dimension. The inventors have found that providing a partial overlap between the first waveguides, so that one or more of the replicas of the arrays of replicas formed by the first waveguides partially overlap in the first dimension, leads to an improved viewing experience.

There is provided a pupil expander comprising a pair of first waveguides. Each first waveguide is arranged to replicate a pupil in a first dimension. The first waveguides are arranged in a configuration so that the array of replicas formed by one first waveguide partially overlaps the array of replicas formed by the other first waveguide in the first dimension.

In some examples, the amount of overlap is less than the size of a single replica in the first dimension. These arrangements may be advantageously used in examples in which the first replicator is arranged for expand or replicating a diffractive light field comprising a hologram having angular content or channels, as described herein. In such examples, the waveguides of the pair of first waveguides may receive different input light (e.g. carrying different ranges of angular content or channels). In particular, the inventors have unexpectedly found that using a pair of first waveguides to form respective arrays of replicas that partially overlap in the first dimension (i.e. the dimension of pupil expansion) also improves the viewing experience.

In other examples, the amount of overlap is greater than or equal to the size of a single replica in the first dimension.

In some embodiments, the first/input ends of the pair of first waveguides are offset in the second dimension. This ensures that, when the first/input ends overlap in the first dimension, the first/input end of one first waveguide does not shadow/block light input into the first/input end of the other first waveguide. It may be said that the respective input ports of the first waveguides are spatially separated, or stacked in height, in the second dimension.

In embodiments, the pair of first waveguides are optically coupled to a second waveguide arranged to expand the pupil in the second dimension of the eye-box. For example, a planar/fold mirror may optically couple the replicas output by the pair of first waveguides into the second waveguide.

In some arrangements, the substantially planar configuration of the pair of first waveguides is substantially parallel to a plane of the second waveguide. For example, the plane of the second waveguide may correspond to a major plane of second waveguide (i.e. a plane of one of the parallel reflective surfaces thereof).

In some embodiments, the input port to the second waveguide comprises a transmissive-reflective element, such as a transmissive-reflective surface or surface coating. Optionally, the reflectivity of the transmissive-reflective element may be graded in the second dimension. The use of a partially reflective/partially transmissive input port at the second waveguide enables efficient in-coupling and trapping of all rays of a divergent ray bundle incident on the input port, including overlapping replicas of a diverging light field. Accordingly, this type of input port has a synergistic effect with embodiments comprising a pair of first waveguides that overlap in the first dimension so that one or more overlapping replicas are formed. Furthermore, since the diverging input light field propagates a shorter distance along each waveguide of the pair of first waveguides than for a single first waveguide, the required input port to the second waveguide is correspondingly shorter (in the second dimension - i.e. dimension of pupil expansion of the second waveguide). The use of a shorter transmissive- reflective input port at the second waveguide reduces any loss in optical efficiency associated therewith.

In some embodiments, the waveguides of the pair of first waveguides are tilted in order to reduce the size/height of the substantially planar configuration in the second dimension. This may further improve the in-coupling efficiency into the second waveguide. As the skilled person will appreciated, the corresponding tilt of the replicas formed and propagated to the eye-box may be compensated by applying a correction to the image content of the diffractive light field or by applying a counter tilt in the orientation of the display system when installed *in situ.*

In embodiments, each first waveguide comprises a first surface being substantially reflective and a second/opposing surface being partially reflective-transmissive in order to provide waveguiding therebetween.

In some embodiments, the first end of one first waveguide comprises an input port for a first display system and the first end of the other first waveguide comprises an input port for a second display system. In some examples, the pair of first waveguides may be used in a binocular display system comprising a first display system for the left eye and a second display system for the right eye. In some arrangements, the one first waveguide is arranged to expand the exit pupil of the first display system in the first dimension and the other first waveguide is arranged to expand the exit pupil of the second display system in the first dimension.

In the present disclosure, the term "replica" is merely used to reflect that spatially modulated light is divided such that a complex light field is directed along a plurality of different optical paths. The word "replica" is used to refer to each occurrence or instance of the complex light field after a replication event - such as a partial reflection-transmission by a pupil expander. Each replica travels along a different optical path. Some embodiments of the present disclosure relate to propagation of light that is encoded with a hologram, not an image - i.e., light that is spatially modulated with a hologram of an image, not the image itself. The person skilled in the art of holography will appreciate that the complex light field associated with propagation of light encoded with a hologram will change with propagation distance. Use herein of the term "replica" is independent of propagation distance and so the two branches or paths of light associated with a replication event are still referred to as "replicas" of each other even if the branches are a different length, such that the complex light field has evolved differently along each path. That is, two complex light fields are still considered "replicas" in accordance with this disclosure even if they are associated with different propagation distances - providing they have arisen from the same replication event or series of replication events.

A "diffracted light field" or "diffractive light field" in accordance with this disclosure is a light field formed by diffraction. A diffracted light field may be formed by illuminating a corresponding diffractive pattern. In accordance with this disclosure, an example of a diffractive pattern is a hologram and an example of a diffracted light field is a holographic light field or a light field forming a holographic reconstruction of an image. The holographic light field forms a (holographic) reconstruction of an image on a replay plane. The holographic light field that propagates from the hologram to the replay plane may be said to comprise light encoded with the hologram or light in the hologram domain. A diffracted light field is characterized by a diffraction angle determined by the smallest feature size of the diffractive structure and the wavelength of the light (of the diffracted light field). In accordance with this disclosure, it may also be said that a "diffracted light field" is a light field that forms a reconstruction on a plane spatially separated from the corresponding diffractive structure. An optical system is disclosed herein for propagating a diffracted light field from a diffractive structure to a viewer. The diffracted light field may form an image.

The term "hologram" is used to refer to the recording which contains amplitude information or phase information, or some combination thereof, regarding the object. The term "holographic reconstruction" is used to refer to the optical reconstruction of the object which is formed by illuminating the hologram. The system disclosed herein is described as a "holographic projector" because the holographic reconstruction is a real image and spatially-separated from the hologram. The term "replay field" is used to refer to the 2D area within which the holographic reconstruction is formed and fully focused. If the hologram is displayed on a spatial light modulator comprising pixels, the replay field will be repeated in the form of a plurality diffracted orders wherein each diffracted order is a replica of the zeroth-order replay field. The zeroth-order replay field generally corresponds to the preferred or primary replay field because it is the brightest replay field. Unless explicitly stated otherwise, the term "replay field" should be taken as referring to the zeroth-order replay field. The term "replay plane" is used to refer to the plane in space containing all the replay fields. The terms "image", "replay image" and "image region" refer to areas of the replay field illuminated by light of the holographic reconstruction. In some embodiments, the "image" may comprise discrete spots which may be referred to as "image spots" or, for convenience only, "image pixels".

The terms "encoding", "writing" or "addressing" are used to describe the process of providing the plurality of pixels of the SLM with a respective plurality of control values which respectively determine the modulation level of each pixel. It may be said that the pixels of the SLM are configured to "display" a light modulation distribution in response to receiving the plurality of control values. Thus, the SLM may be said to "display" a hologram and the hologram may be considered an array of light modulation values or levels.

It has been found that a holographic reconstruction of acceptable quality can be formed from a "hologram" containing only phase information related to the Fourier transform of the original object. Such a holographic recording may be referred to as a phase-only hologram. Embodiments relate to a phase-only hologram but the present disclosure is equally applicable to amplitude-only holography.

The present disclosure is also equally applicable to forming a holographic reconstruction using amplitude *and* phase information related to the Fourier transform of the original object. In some embodiments, this is achieved by complex modulation using a so-called fully complex hologram which contains both amplitude and phase information related to the original object. Such a hologram may be referred to as a fully-complex hologram because the value (grey level) assigned to each pixel of the hologram has an amplitude and phase component. The value (grey level) assigned to each pixel may be represented as a complex number having both amplitude and phase components. In some embodiments, a fully-complex computer-generated hologram is calculated.

Reference may be made to the phase value, phase component, phase information or, simply, phase of pixels of the computer-generated hologram or the spatial light modulator as shorthand for "phase-delay". That is, any phase value described is, in fact, a number (e.g. in the range 0 to 2π) which represents the amount of phase retardation provided by that pixel. For example, a pixel of the spatial light modulator described as having a phase value of π/2 will retard the phase of received light by π/2 radians. In some embodiments, each pixel of the spatial light modulator is operable in one of a plurality of possible modulation values (e.g. phase delay values). The term "grey level" may be used to refer to the plurality of available modulation levels. For example, the term "grey level" may be used for convenience to refer to the plurality of available phase levels in a phase-only modulator even though different phase levels do not provide different shades of grey. The term "grey level" may also be used for convenience to refer to the plurality of available complex modulation levels in a complex modulator.

The hologram therefore comprises an array of grey levels - that is, an array of light modulation values such as an array of phase-delay values or complex modulation values. The hologram is also considered a diffractive pattern because it is a pattern that causes diffraction when displayed on a spatial light modulator and illuminated with light having a wavelength comparable to, generally less than, the pixel pitch of the spatial light modulator. Reference is made herein to combining the hologram with other diffractive patterns such as diffractive patterns functioning as a lens or grating. For example, a diffractive pattern functioning as a grating may be combined with a hologram to translate the replay field on the replay plane or a diffractive pattern functioning as a lens may be combined with a hologram to focus the holographic reconstruction on a replay plane in the near field.

Although different embodiments and groups of embodiments may be disclosed separately in the detailed description which follows, any feature of any embodiment or group of embodiments may be combined with any other feature or combination of features of any embodiment or group of embodiments. That is, all possible combinations and permutations of features disclosed in the present disclosure are envisaged.

In the present disclosure, the term "substantially" when applied to a structural units of an apparatus may be interpreted as the technical feature of the structural units being produced within the technical tolerance of the method used to manufacture it.

### BRIEF DESCRIPTION OF THE DRAWINGS

Specific embodiments are described by way of example only with reference to the following figures:
Figure 1 is a schematic showing a reflective SLM producing a holographic reconstruction on a screen;
Figure 2 shows an image for projection comprising eight image areas/components, V1 to V8;
Figure 3 shows a hologram displayed on an LCOS that directs light into a plurality of discrete areas.
Figure 4 shows a system, including a display device that displays a hologram that has been calculated as illustrated in Figures 2 and 3;
Figure 5A shows a perspective view of a system comprising two replicators arranged for expanding a light beam in two dimensions;
Figure 5B is a perspective view of another system comprising two replicators arranged for expanding a light beam in two dimensions;
Figure 6 is a side view of an elongated waveguide replicator for expanding diverging input light in a first dimension;
Figure 7 is a side view of a replicator comprising a pair of elongated waveguides arranged for expanding diverging input light in a first dimension in accordance with an embodiment;
Figure 8 is a side view of a replicator comprising a pair of elongated waveguides arranged for expanding diverging input light in a first dimension in accordance with another embodiment;
Figure 9 is a top view of the replicator of Figure 8;
Figures 10A shows an example of the one-dimensional arrays of replicas formed by the respective waveguides of a pair of elongated waveguides of the embodiment of Figure 8;
Figure 10B shows the overlapping replicas of the arrays of Figure 10A;
Figure 11 is a perspective view of the output ends of the pair of elongated waveguides of the embodiment of Figure 8 showing how the output light may be coupled into a second waveguide for expansion in a second dimension, and
Figure 12 shows an example of the two-dimensional arrays of replicas formed by the second waveguide of Figure 11 as seen at the eye-box of a display system.

The same reference numbers will be used throughout the drawings to refer to the same or like parts.

### DETAILED DESCRIPTION OF EMBODIMENTS

The present invention is not restricted to the embodiments described in the following but extends to the full scope of the appended claims. That is, the present invention may be embodied in different forms and should not be construed as limited to the described embodiments, which are set out for the purpose of illustration.

Terms of a singular form may include plural forms unless specified otherwise.

A structure described as being formed at an upper portion/lower portion of another structure or on/under the other structure should be construed as including a case where the structures contact each other and, moreover, a case where a third structure is disposed there between.

In describing a time relationship - for example, when the temporal order of events is described as "after", "subsequent", "next", "before" or suchlike- the present disclosure should be taken to include continuous and non-continuous events unless otherwise specified. For example, the description should be taken to include a case which is not continuous unless wording such as "just", "immediate" or "direct" is used.

Although the terms "first", "second", etc. may be used herein to describe various elements, these elements are not to be limited by these terms. These terms are only used to distinguish one element from another. For example, a first element could be termed a second element, and, similarly, a second element could be termed a first element, without departing from the scope of the appended claims.

In the present disclosure, the term "substantially" when applied to a structural units of an apparatus may be interpreted as the technical feature of the structural units being produced within the technical tolerance of the method used to manufacture it.

Features of different embodiments may be partially or overall coupled to or combined with each other, and may be variously inter-operated with each other. Some embodiments may be carried out independently from each other, or may be carried out together in co-dependent relationship.

### Optical configuration

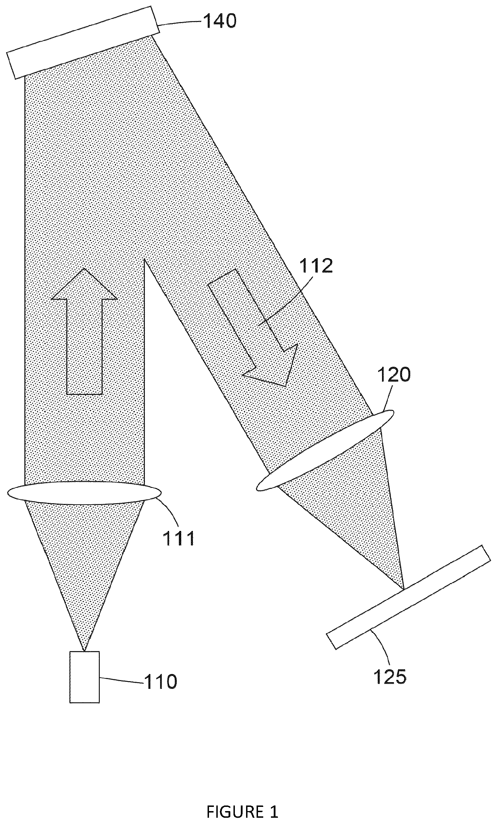

Figure 1 shows an embodiment in which a computer-generated hologram is encoded on a single spatial light modulator. The computer-generated hologram is a Fourier transform of the object for reconstruction. It may therefore be said that the hologram is a Fourier domain or frequency domain or spectral domain representation of the object. In this embodiment, the spatial light modulator is a reflective liquid crystal on silicon, "LCOS", device. The hologram is encoded on the spatial light modulator and a holographic reconstruction is formed at a replay field, for example, a light receiving surface such as a screen or diffuser.

A light source 110, for example a laser or laser diode, is disposed to illuminate the SLM 140 via a collimating lens 111. The collimating lens causes a generally planar wavefront of light to be incident on the SLM. In Figure 1, the direction of the wavefront is off-normal (e.g. two or three degrees away from being truly orthogonal to the plane of the transparent layer). However, in other embodiments, the generally planar wavefront is provided at normal incidence and a beam splitter arrangement is used to separate the input and output optical paths. In the embodiment shown in Figure 1, the arrangement is such that light from the light source is reflected off a mirrored rear surface of the SLM and interacts with a light-modulating layer to form an exit wavefront 112. The exit wavefront 112 is applied to optics including a Fourier transform lens 120, having its focus at a screen 125. More specifically, the Fourier transform lens 120 receives a beam of modulated light from the SLM 140 and performs a frequency-space transformation to produce a holographic reconstruction at the screen 125.

Notably, in this type of holography, each pixel of the hologram contributes to the whole reconstruction. There is *not* a one-to-one correlation between specific points (or image pixels) on the replay field and specific light-modulating elements (or hologram pixels). In other words, modulated light exiting the light-modulating layer is distributed across the replay field.

In these embodiments, the position of the holographic reconstruction in space is determined by the dioptric (focusing) power of the Fourier transform lens. In the embodiment shown in Figure 1, the Fourier transform lens is a physical lens. That is, the Fourier transform lens is an optical Fourier transform lens and the Fourier transform is performed optically. Any lens can act as a Fourier transform lens but the performance of the lens will limit the accuracy of the Fourier transform it performs. The skilled person understands how to use a lens to perform an optical Fourier transform.

### Hologram calculation

In some embodiments, the computer-generated hologram is a Fourier transform hologram, or simply a Fourier hologram or Fourier-based hologram, in which an image is reconstructed in the far field by utilising the Fourier transforming properties of a positive lens. The Fourier hologram is calculated by Fourier transforming the desired light field in the replay plane back to the lens plane. Computer-generated Fourier holograms may be calculated using Fourier transforms. Embodiments relate to Fourier holography and Gerchberg-Saxton type algorithms by way of example only. The present disclosure is equally applicable to Fresnel holography and Fresnel holograms which may be calculated by a similar method. In some embodiments, the hologram is a phase or phase-only hologram. However, the present disclosure is also applicable to holograms calculated by other techniques such as those based on point cloud methods. British patent application GB 2112213.0 filed 26 August 2021, incorporated herein by reference, discloses example hologram calculation methods that may be combined with the present disclosure.

In some embodiments, there is provided a real-time engine arranged to receive image data and calculate holograms in real-time using the algorithm. In some embodiments, the image data is a video comprising a sequence of image frames. In other embodiments, the holograms are pre-calculated, stored in computer memory and recalled as needed for display on a SLM. That is, in some embodiments, there is provided a repository of predetermined holograms.

### Light modulation

The display system comprises a display device which in embodiments defines the exit pupil of the display system. The display device is a spatial light modulator. The spatial light modulation may be a phase modulator. The display device may be a liquid crystal on silicon, "LCOS", spatial light modulator.

### Light channelling

The optical system disclosed herein is applicable to pupil expansion with any diffracted light field. In some embodiments, the diffracted light field is a holographic light field - that is, a complex light field that has been spatially modulated in accordance with a hologram of an image, not the image itself. In some embodiments, the hologram is a special type of hologram that angularly divides/channels the image content. This type of hologram is described further herein merely as an example of a diffracted light field that is compatible with the present disclosure. Other types of hologram may be used in conjunction with the display systems and light engines disclosed herein.

A display system and method are described herebelow, which comprise a waveguide pupil expander. As will be familiar to the skilled reader, the waveguide may be configured as a 'pupil expander' because it can be used to increase the area over (or, within) which the light emitted by a relatively small light emitter - such as a relatively small SLM or other pixelated display device as used in the arrangements described herein - can be viewed by a human viewer or other viewing system that is located at a distance, such as a relatively large distance, away from the light emitter. The waveguide achieves this by increasing the number of transmission points from which the light is output, towards the viewer. As a result, the light may be seen from a plurality of different viewer locations and, for example, the viewer may be able to move their head, and therefore their line of sight, whilst still being able to see the light from the light emitter. Thus, it can be said that the viewer's 'eye-box' or 'eye-motion box' is enlarged, through use of a waveguide pupil expander. This has many useful applications, for example but not limited to head-up displays, for example but not limited to automotive head-up displays.

A display system as described herein may be configured to guide light, such as a diffracted light field, through a waveguide pupil expander in order to provide pupil expansion in at least one dimension, for example in two dimensions. The diffracted light field may comprise light output by a spatial light modulator (SLM), such as an LCOS SLM. For example, that diffracted light field may comprise light that is encoded by a hologram displayed by the SLM. For example, that diffracted light field may comprise light of a holographically reconstructed image, corresponding to a hologram displayed by the SL M. The hologram may comprise a computer-generated hologram (CGH) such as, but not limited to, a point-cloud hologram, a Fresnel hologram, or a Fourier hologram. The hologram may be referred to as being a 'diffractive structure' or a 'modulation pattern'. The SLM or other display device may be arranged to display a diffractive pattern (or, modulation pattern) that comprises the hologram and one or more other elements such as a software lens or diffraction grating, in a manner that will be familiar to the skilled reader.

The hologram may be calculated to provide channelling of the diffracted light field. This is described in detail in each of GB2101666.2, GB2101667.0, and GB2112213.0, all of which are incorporated by reference herein. In general terms, the hologram may be calculated to correspond to an image that is to be holographically reconstructed. That image, to which the hologram corresponds, may be referred to as an 'input image' or a 'target image'. The hologram may be calculated so that, when it is displayed on an SLM and suitably illuminated, it forms a light field (output by the SLM) that comprises a cone of spatially modulated light. In some embodiments the cone comprises a plurality of continuous light channels of spatially modulated light that correspond with respective continuous regions of the image. However, the present disclosure is not limited to a hologram of this type.

Although we refer to a 'hologram' or to a 'computer-generated hologram (CGH)' herein, it will be appreciated that an SLM may be configured to dynamically display a plurality of different holograms in succession or according to a sequence. The systems and methods described herein are applicable to the dynamic display of a plurality of different holograms.

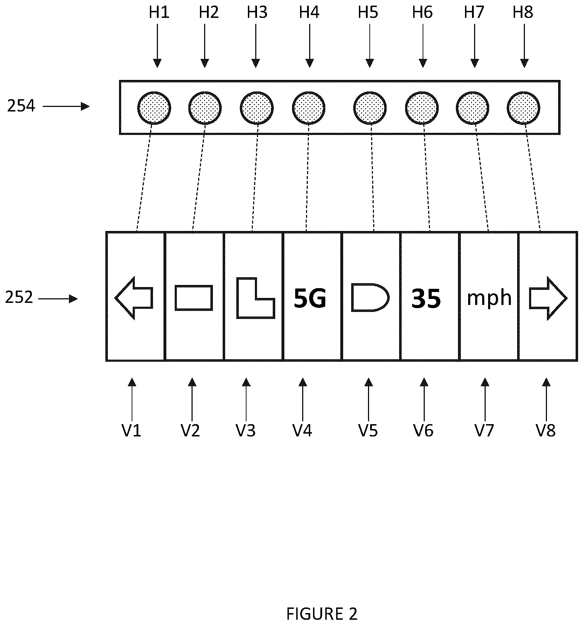

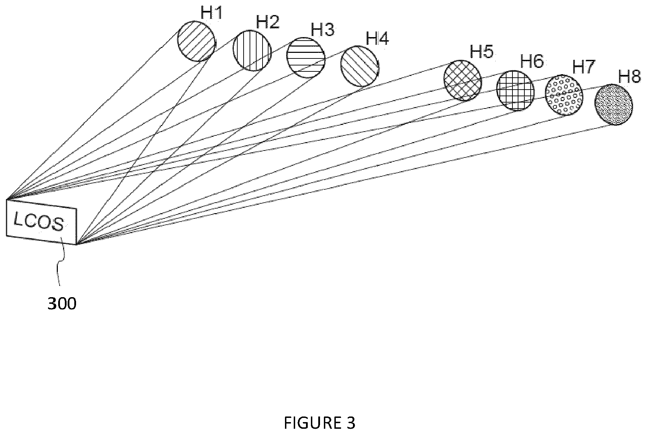

Figures 2 and 3 show an example of a type of hologram that may be displayed on a display device such as an SLM, which can be used in conjunction with a pupil expander as disclosed herein. However, this example should not be regarded as limiting with respect to the present disclosure.

Figure 2 shows an image 252 for projection comprising eight image areas/components, V1 to V8. Figure 2 shows eight image components by way of example only and the image 252 may be divided into any number of components. Figure 2 also shows an encoded light pattern 254 (i.e., hologram) that can reconstruct the image 252 - e.g., when transformed by the lens of a suitable viewing system. The encoded light pattern 254 comprises first to eighth sub-holograms or components, H1 to H8, corresponding to the first to eighth image components/areas, V1 to V8. Figure 2 further shows how a hologram may decompose the image content by angle. The hologram may therefore be characterised by the channelling of light that it performs. This is illustrated in Figure 3. Specifically, the hologram in this example directs light into a plurality of discrete areas. The discrete areas are discs in the example shown but other shapes are envisaged. The size and shape of the optimum disc may, after propagation through the waveguide, be related to the size and shape of the entrance pupil of the viewing system.

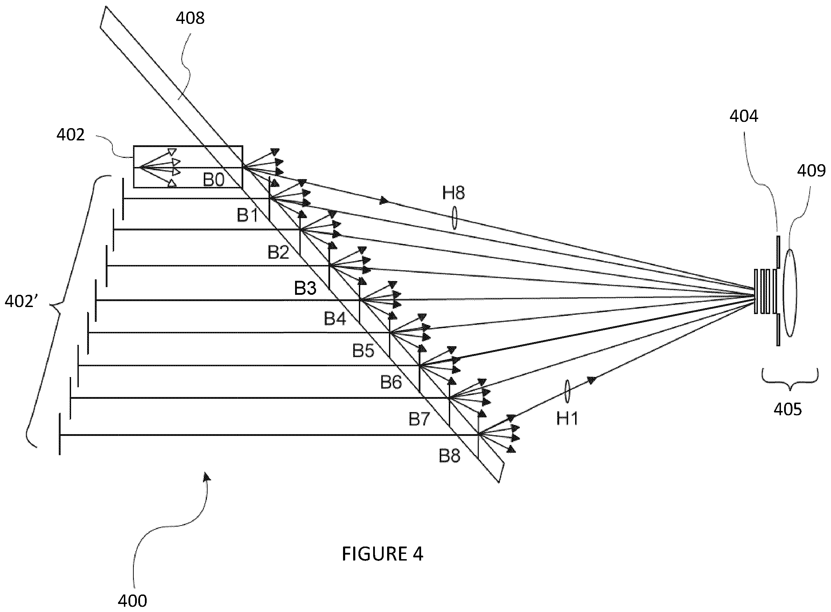

Figure 4 shows a system 400, including a display device that displays a hologram that has been calculated as illustrated in Figures 2 and 3.

The system 400 comprises a display device, which in this arrangement comprises an LCOS 402. The LCOS 402 is arranged to display a modulation pattern (or 'diffractive pattern') comprising the hologram and to project light that has been holographically encoded towards an eye 405 that comprises a pupil that acts as an aperture 404, a lens 409, and a retina (not shown) that acts as a viewing plane. There is a light source (not shown) arranged to illuminate the LCOS 402. The lens 409 of the eye 405 performs a hologram-to-image transformation. The light source may be of any suitable type. For example, it may comprise a laser light source.

The viewing system 400 further comprises a waveguide 408 positioned between the LCOS 402 and the eye 405. The presence of the waveguide 408 enables all angular content from the LCOS 402 to be received by the eye, even at the relatively large projection distance shown. This is because the waveguide 508 acts as a pupil expander, in a manner that is well known and so is described only briefly herein.

In brief, the waveguide 408 shown in Figure 4 comprises a substantially elongate formation. In this example, the waveguide 408 comprises an optical slab of refractive material, but other types of waveguide are also well known and may be used. The waveguide 408 is located so as to intersect the light cone (i.e., the diffracted light field) that is projected from the LCOS 402, for example at an oblique angle. In this example, the size, location, and position of the waveguide 408 are configured to ensure that light from each of the eight ray bundles, within the light cone, enters the waveguide 408. Light from the light cone enters the waveguide 408 via its first planar surface (located nearest the LCOS 402) and is guided at least partially along the length of the waveguide 408, before being emitted via its second planar surface, substantially opposite the first surface (located nearest the eye). As will be well understood, the second planar surface is partially reflective, partially transmissive. In other words, when each ray of light travels within the waveguide 408 from the first planar surface and hits the second planar surface, some of the light will be transmitted out of the waveguide 408 and some will be reflected by the second planar surface, back towards the first planar surface. The first planar surface is reflective, such that all light that hits it, from within the waveguide 408, will be reflected back towards the second planar surface. Therefore, some of the light may simply be refracted between the two planar surfaces of the waveguide 408 before being transmitted, whilst other light may be reflected, and thus may undergo one or more reflections, (or 'bounces') between the planar surfaces of the waveguide 408, before being transmitted.

Figure 4 shows a total of nine "bounce" points, B0 to B8, along the length of the waveguide 408. Although light relating to all points of the image (V1-V8) as shown in Figure 2 is transmitted out of the waveguide at each "bounce" from the second planar surface of the waveguide 408, only the light from one angular part of the image (e.g. light of one of V1 to V8) has a trajectory that enables it to reach the eye 405, from each respective "bounce" point, B0 to B8. Moreover, light from a different angular part of the image, V1 to V8, reaches the eye 405 from each respective "bounce" point. Therefore, each angular channel of encoded light reaches the eye only once, from the waveguide 408, in the example of Figure 4.

The waveguide 408 forms a plurality of replicas of the hologram, at the respective "bounce" points B1 to B8 along its length, corresponding to the direction of pupil expansion. As shown in Figure 4, the plurality of replicas may be extrapolated back, in a straight line, to a corresponding plurality of replica or virtual display devices 402'. This process corresponds to the step of "unfolding" an optical path within the waveguide, so that a light ray of a replica is extrapolated back to a "virtual surface" without internal reflection within the waveguide. Thus, the light of the expanded exit pupil may be considered to originate from a virtual surface (also called an "extended modulator" herein) comprising the display device 402 and the replica display devices 402'.

The methods and arrangements described above can be implemented in a variety of different applications and viewing systems. For example, they may be implemented in a head-up-display (HUD) or in a head or helmet mounted device (HMD) such as an Augmented Reality (AR) HMD.

Although virtual images, which require the eye to transform received modulated light in order to form a perceived image, have generally been discussed herein, the methods and arrangements described herein can be applied to real images.

### Two-Dimensional Pupil Expansion

Whilst the arrangement shown in Figure 4 includes a single waveguide that provides pupil expansion in one dimension, pupil expansion can be provided in more than one dimension, for example in two dimensions. Moreover, whilst the example in Figure 4 uses a hologram that has been calculated to create channels of light, each corresponding to a different portion of an image, the present disclosure and the systems that are described herebelow are not limited to such a hologram type.

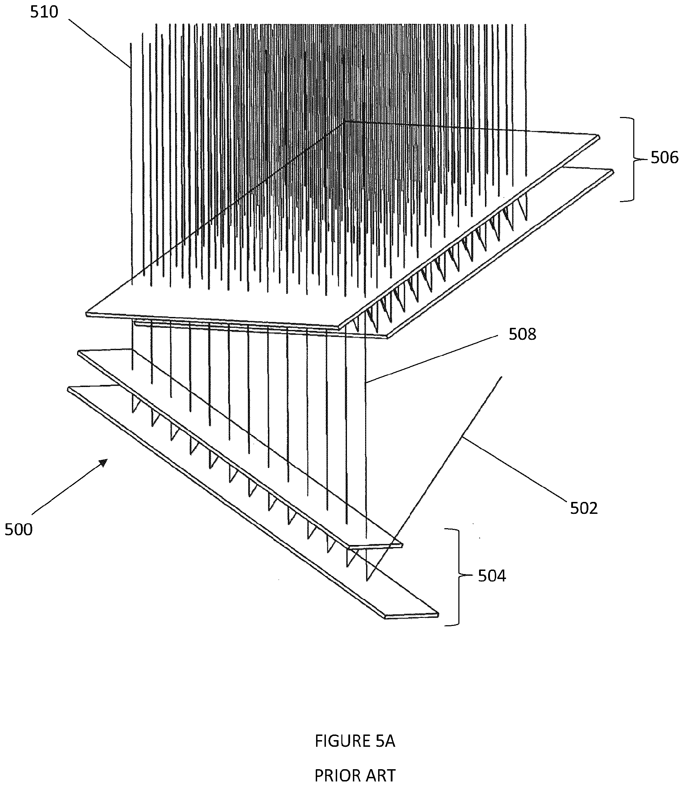

Figure 5A shows a perspective view of a system 500 comprising two replicators, 504, 506 arranged for expanding a light beam 502 in two dimensions.

In the system 500 of Figure 5A, the first replicator 504 comprises a first pair of surfaces, stacked parallel to one another, and arranged to provide replication - or, pupil expansion - in a similar manner to the waveguide 408 of Figure 4. The first pair of surfaces are similarly (in some cases, identically) sized and shaped to one another and are substantially elongate in one direction. The collimated light beam 502 is directed towards an input on the first replicator 504. Due to a process of internal reflection between the two surfaces, and partial transmission of light from each of a plurality of output points on one of the surfaces (the upper surface, as shown in Figure 5A), which will be familiar to the skilled reader, light of the light beam 502 is replicated in a first direction, along the length of the first replicator 504. Thus, a first plurality of replica light beams 508 is emitted from the first replicator 504, towards the second replicator 506.

The second replicator 506 comprises a second pair of surfaces stacked parallel to one another, arranged to receive each of the collimated light beams of the first plurality of light beams 508 and further arranged to provide replication - or, pupil expansion - by expanding each of those light beams in a second direction, substantially orthogonal to the first direction. The first pair of surfaces are similarly (in some cases, identically) sized and shaped to one another and are substantially rectangular. The rectangular shape is implemented for the second replicator in order for it to have length along the first direction, in order to receive the first plurality of light beams 508, and to have length along the second, orthogonal direction, in order to provide replication in that second direction. Due to a process of internal reflection between the two surfaces, and partial transmission of light from each of a plurality of output points on one of the surfaces (the upper surface, as shown in Figure 5A), light of each light beam within the first plurality of light beams 508 is replicated in the second direction. Thus, a second plurality of light beams 510 is emitted from the second replicator 506, wherein the second plurality of light beams 510 comprises replicas of the input light beam 502 along each of the first direction and the second direction. Thus, the second plurality of light beams 510 may be regarded as comprising a two-dimensional grid, or array, of replica light beams.

Thus, it can be said that the first and second replicators 504, 505 of Figure 5A combine to provide a two-dimensional replicator (or, "two-dimensional pupil expander"). Thus, the replica light beams 510 may be emitted along an optical path to an expanded eye-box of a display system, such as a head-up display.

In the system of Figure 5A, the first replicator 504 is a waveguide comprising a pair of elongate rectilinear reflective surfaces, stacked parallel to one another, and, similarly, the second replicator 504 is a waveguide comprising a pair of rectangular reflective surfaces, stacked parallel to one another. In other systems, the first replicator may be a solid elongate rectilinear waveguide and the second replicator may be a solid planar rectangular shaped waveguide, wherein each waveguide comprises an optically transparent solid material such as glass. In this case, the pair of parallel reflective surfaces are formed by a pair of opposed major sidewalls optionally comprising respective reflective and reflective-transmissive surface coatings, familiar to the skilled reader.

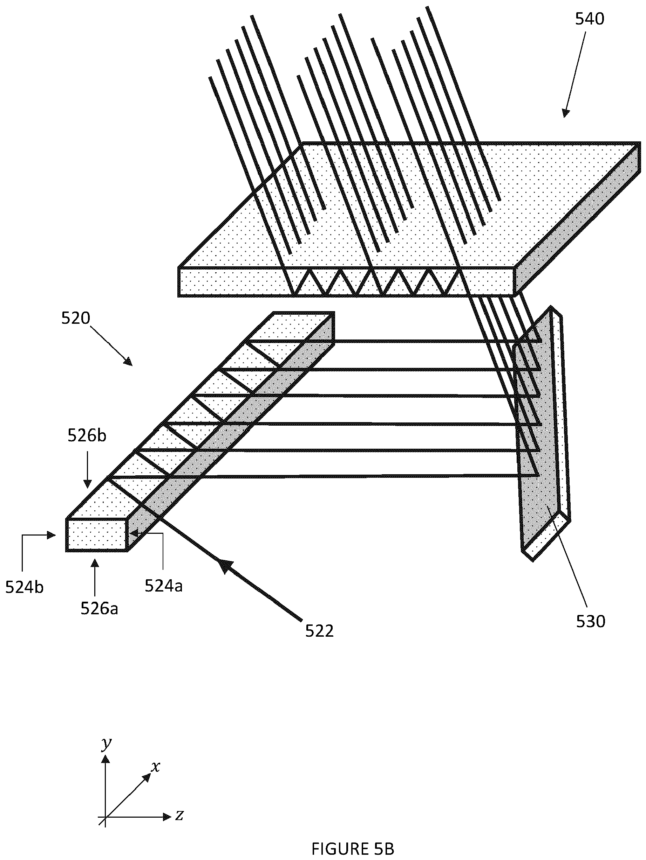

Figure 5B shows a perspective view of a system 500 comprising two replicators, 520, 540 arranged for replicating a light beam 522 in two dimensions, in which the first replicator is a solid elongated waveguide 520 and the second replicator is a solid planar waveguide 540.

In the system of Figure 5B, the first replicator/waveguide 520 is arranged so that its pair of elongate parallel reflective surfaces 524a, 524b are perpendicular to the plane of the second replicator/ waveguide 540. Accordingly, the system comprises an optical coupler arranged to couple light from an output port of first replicator 520 into an input port of the second replicator 540. In the illustrated arrangement, the optical coupler is a planar/fold mirror 530 arranged to fold or turn the optical path of light to achieve the required optical coupling from the first replicator to the second replicator. As shown in Figure 5B, the mirror 530 is arranged to receive light - comprising a one-dimensional array of replicas extending in the first dimension - from the output port / reflective-transmissive surface 524a of the first replicator/waveguide 520. The mirror 530 is tilted so as to redirect the received light onto an optical path to an input port in the (fully) reflective surface of second replicator 540 at an angle to provide waveguiding and replica formation, along its length in the second dimension. It will be appreciated that the mirror 530 is one example of an optical element that can redirect the light in the manner shown, and that one or more other elements may be used instead, to perform this task.

In the illustrated arrangement, the (partially) reflective-transmissive surface 524a of the first replicator 520 is adjacent the input port of the first replicator/waveguide 520 that receives input beam 522 at an angle to provide waveguiding and replica formation, along its length in the first dimension. Thus, the input port of first replicator/waveguide 520 is positioned at an input end thereof at the same surface as the reflective-transmissive surface 524a. The skilled reader will understand that the input port of the first replicator/waveguide 520 may be at any other suitable position.

Accordingly, the arrangement of Figure 5B enables the first replicator 520 and the mirror 530 to be provided as part of a first relatively thin layer in a plane in the first and third dimensions (illustrated as an x-z plane). In particular, the size or "height" of a first planar layer - in which the first replicator 520 is located - in the second dimension (illustrated as the y dimension) is reduced. The mirror 530 is configured to direct the light away from a first layer/plane, in which the first replicator 520 is located (i.e. the "first planar layer"), and direct it towards a second layer/plane, located above and substantially parallel to the first layer/plane, in which the second replicator 540 is located (i.e. a "second planar layer"). Thus, the overall size or "height" of the system - comprising the first and second replicators 520, 540 and the mirror 530 located in the stacked first and second planar layers in the first and third dimensions (illustrated as an x-z plane) - in the second dimension (illustrated as the y dimension) is compact. The skilled reader will understand that many variations of the arrangement of Figure 5B for implementing the present disclosure are possible and contemplated.

### One-dimensional Pupil Expansion of Diverging Light

In some implementations, the input light to the first replicator is diverging. For example, as described herein, the input light may comprise a diffracted light field - e.g. corresponding to a hologram - comprising diverging light ray bundles. Accordingly, the size of the light field increases with distance as the light propagates along the length of the waveguide.

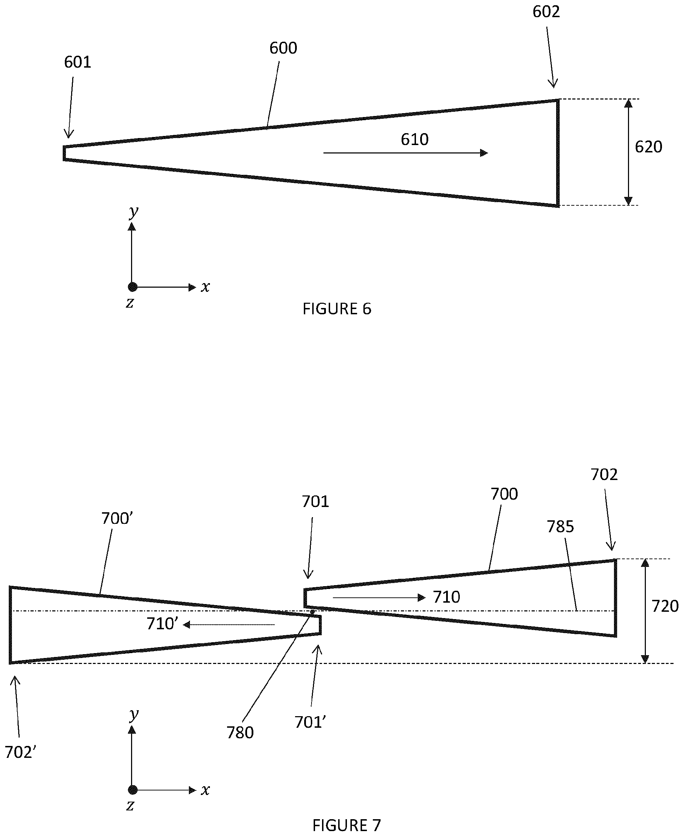

Figure 6 shows a side view of an example waveguide 600 forming the first replicator illustrating the shape of one of the pair of parallel reflective surfaces thereof, such as the partially reflective-transmissive surface forming the output port. The skilled reader will understand that the other reflective surface of the waveguide 600 has the same shape. In the example of waveguide 600, the width of the reflective surface in the second dimension (illustrated as the y dimension) varies along the length/direction of elongation of the waveguide 600, which extends in the first dimension of pupil expansion (illustrated as the x dimension). In particular, the width of the reflective surface increases from a first/input end 601 to a second/output end 602, in order to accommodate the increasing size of the diverging light field (in the second dimension - illustrated as the y dimension) along the length of the waveguide 600, as shown by arrow 610. In the illustrated example, the waveguide 600 is tapered along its length such that its first/input end 601 is narrower than its second/output end 602. It may be said that the width of the waveguide is tapered outwardly along its length from its input end 601 to its output end 602. Thus, in implementations in which waveguide 600 is a solid elongated waveguide, the separation between the pair of opposing non-reflective/non-waveguiding sidewalls increases along the length of the waveguide 600 - such that it is tapered from a minimum size/thickness at its first/input end to a maximum size/thickness 620 in a second dimension (illustrated as the y dimension) at its second/output end 602.

In some applications, the amount of pupil expansion/replication required from the first replicator necessitates a relatively long waveguide in the elongate direction (i.e. the first dimension of pupil expansion). As the skilled reader will understand, the input light to the first replicator (and each of the output replicas) substantially propagates in a third direction, orthogonal to the first and second dimensions. In some configurations, the first replicator is orientated at an acute angle for waveguiding between its pair of parallel reflective surfaces and replica formation. For example, in the configuration shown in Figure 5A, the first replicator 504 is inclined at an acute angle relative to the plane of the second replicator 506 in the first and third dimensions, such that a relatively long waveguide may occupy significantly more space in the second dimension compared to a non-angled configuration. In consequence, as the length of the waveguide increase, there is an increase in the space required for the waveguide. Furthermore, in some arrangements, the tapered shape of the parallel reflective surfaces for propagating diverging input light may additionally increase the space required for the waveguide in the second dimension, further increasing the overall volume occupied. Thus, in some applications, the replicator may become too bulky to be accommodated within the space available for the display system, such as under the dashboard of a vehicle in an automotive head-up display application.

Figure 7 shows a side view of a first replicator arranged for providing pupil expansion in a first dimension comprising a pair of first waveguides 700, 700', in accordance with an embodiment. Similar to the side view of Figure 6, Figure 7 illustrates the shape of one of the pair of parallel reflective surfaces, such as the (partially) reflective-transmissive surface forming the output port, of each of the waveguides 700, 700'. The waveguides 700, 700' may be solid elongated waveguides, as described above.

Similar to the waveguide 600 of Figure 6, the parallel reflective surfaces have a tapered shape for propagating diverging input light. Accordingly, as shown in Figure 7, each first waveguide 700, 700' is elongate and tapered along the length thereof such that its first/input end 701, 701' is narrower than its second/output end 702, 702'. The waveguides 700, 700' are arranged so that their first/input ends 701, 701' are substantially proximate (or adjacent) each other - at the centre of the arrangement - and their second/output ends 702, 702' are substantially distal (or remote) from each other. Each first waveguide 700, 700' is arranged to provide pupil expansion/replication of an input beam in the first dimension (illustrated as the x dimension) - by forming replicas along its length from its input/proximal end 701, 701' to its output/distal end 702, 702'. Thus, the first waveguides 700, 700' are arranged to propagate an input light beam, and thus provide pupil expansion/replication, in opposite directions of the first dimension, as shown by arrows 710, 710'. Since the input/proximal ends 701, 701' of both waveguides 700, 700' are at the centre, the illustrated arrangement has the advantage that any residual light at the output ends 702, 702' of the waveguides 700, 700' can be terminated at the edges of the replicator. For example, a housing at the edges of the replicator can be arranged to absorb light so as to avoid undesirable reflections of stray light that could enter the field of view of the display system.

In the illustrated example, each first waveguide 700, 700' has substantially the same length and, thus, is arranged to form approximately half the required number of replicas (i.e. provide half the amount of pupil expansion/replication) in the first dimension. The skilled reader will appreciate that other arrangements comprising waveguides of different lengths are possible and contemplated.

The first waveguides 700, 700' are arranged in a symmetrical configuration about an axis of symmetry 780 extending in the third dimension at the centre thereof - i.e. between their respective input ends 701, 701'. In implementations, the pair of first waveguides 700, 700' may comprise solid elongated waveguides, as described above. Accordingly, in practice, the first waveguides 700, 700' may be the same, and, thus, each waveguide 700, 700' may comprise the same custom or off-the shelf optical component, such as a solid elongated waveguide of the same shape, size and material, but arranged with one flipped in orientation with respect to each other (e.g. about the axis of symmetry 780). Since each waveguide 700, 700' has a reduced length compared to the single waveguide of Figure 6, its maximum size/thickness in the second dimension (illustrated as the y dimension) at its output end 702, 702' is similarly reduced.

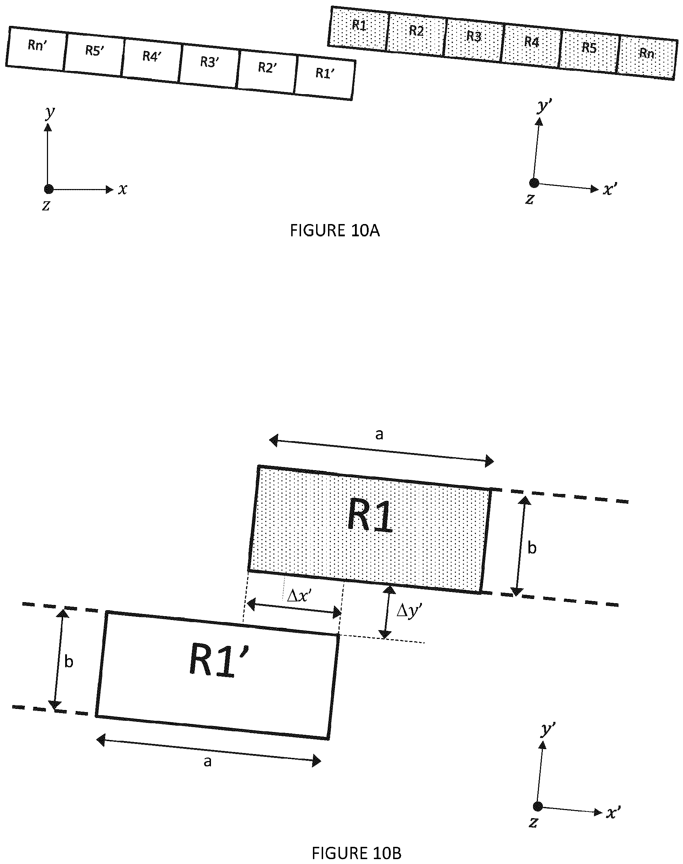

The first/input ends 701, 701' of the first waveguides 700, 700' overlap each other in the first dimension (illustrated as the x dimension), so that the respective one-dimensional arrays of replicas formed partially overlap each other, as discussed further below with reference to Figures 10A and 10B. Accordingly, to allow separate input light beams to be received through an input port at their respective first/input ends 701, 701', the first waveguides 700, 700' are offset from each other at their first/input ends 701, 701' in the direction of the second dimension (illustrated as the y dimension). It may be said that the input ends 710, 701' are stacked (in "height") in the second dimension. This offset or stacking means that the maximum size/height 720 of the first replicator in the second dimension is greater than the maximum size/thickness of the output ends 702, 702' of the first waveguides 700, 700'. Notably, the first waveguides 700, 700' are offset from each other at their proximal first/input ends 701, 701' where the varying size/thickness in the second dimension is a minimum. However, since no corresponding offset is required at their distal second/output ends 702, 702', the first waveguides 700, 700' partially overlap in the second dimension due to the tapering (i.e. the increasing size/thickness in the second dimension) such that the maximum size/height 720 of the first replicator is reduced.

In the illustrated embodiment, the pair of first waveguides 700, 700' of the first replicator is arranged in a substantially planar configuration. In particular, each of the waveguides of the pair of first waveguides 700, 700' is in a plane in the first and third dimensions (illustrated as the x and z dimensions) such that the direction of pupil expansion by the respective first waveguides 700, 700', as shown by arrows 710, 710', is precisely in the first dimension. Thus, the maximum size/height 720 of the first replicator in the second dimension (illustrated as the y dimension) represents the "height" of the substantially planar configuration of the first replicator - between the dotted lines in Figure 7 - which contributes to the overall "height" of the two-dimensional pupil expander in the second dimension, as discussed further below. The substantially planar configuration may occupy (or be located within) a first planar layer, as described above, wherein the first planar layer extends in the first and third dimensions (illustrated as the x and z dimensions) and has a height or thickness in the second dimension (illustrated as the y dimension). Notably, the medial plane 785 of the symmetrical configuration - an imaginary plane in the first and third dimension (illustrated as an x-z plane) that passes through the axis of symmetry 780 - of the pair of first waveguides 700, 700' is at half the maximum size/height 720 in the second dimension.

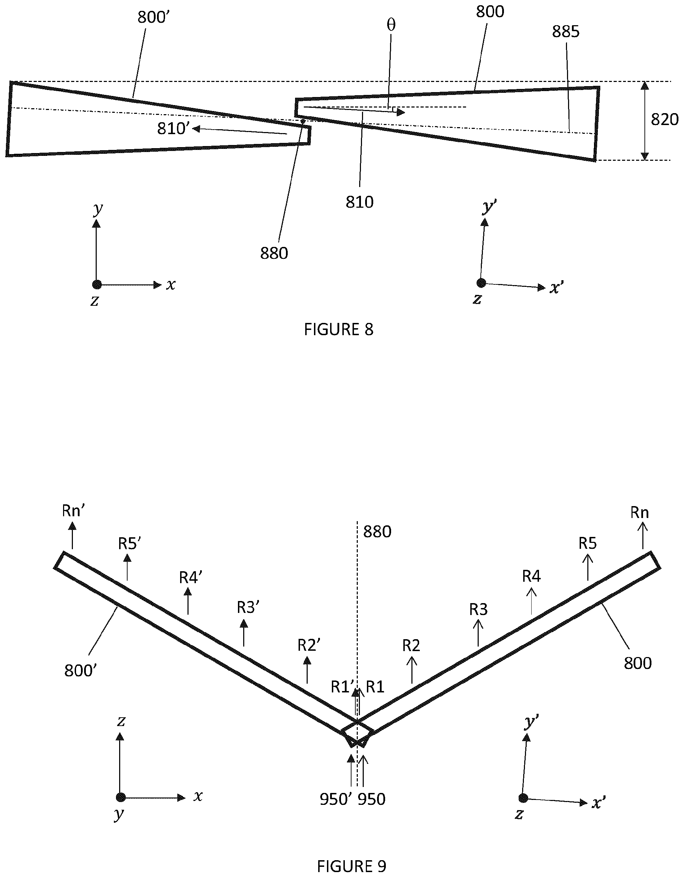

Figure 8 shows a side view of a first replicator arranged for providing pupil expansion in a first dimension comprising a pair of first waveguides 800, 800', in accordance with another embodiment. The first waveguides 800, 800' are substantially the same as the pair of first waveguides 700, 700' of the embodiment of Figure 7 and are similarly arranged to provide pupil expansion in opposite directions of the first dimension (illustrated as the x dimension), as shown by arrows 810, 810'. Accordingly, the arrangement of Figure 8 is not described in detail herein. However, in contrast to the embodiment of Figure 7, the pair of first waveguides 800, 800' is tilted so as to further reduce the maximum size/height 820 of the first replicator in the second dimension (illustrated as the y dimension). In particular, the medial plane 885 - the imaginary plane passing through the axis of symmetry of the symmetrical configuration of the pair of first waveguides 800, 800' - is tilted at an acute angle relative to the first dimension. In particular, the symmetrical configuration shown in Figure 7 - which has a maximum size/height 720 in the second dimension, as shown by dotted lines in Figure 7 - is tilted clockwise about its axis of symmetry 880 - a central axis extending in the third dimension - by a global tilt angle θ to the position shown in Figure 8 - which has a smaller maximum size/height 820 in the second dimension, as shown by the dotted lines in Figure 8.

Notably, the global tilt angle θ applied to the pair of first waveguides results 800, 800' - out of a plane in the first and third dimensions (illustrated as an x-z plane) - means that that the direction of pupil expansion by each waveguide of the pair of first waveguides 800, 800' is also tilted (in different directions about the axis of symmetry 880) by the same global tilt angle θ with respect to the first dimension, as shown by arrows 810, 810'. In consequence, the generally planar arrangement of the pair of first waveguides 800, 800' of Figure 8 may be defined in a tilted coordinate system, having modified first and second dimensions x', y', which are tilted by global tilt angle θ relative to the (original) first and second dimensions x, y. The third dimension z' of the tilted coordinate system is the same as the (original) third dimension z.

Figure 9 shows a top view of the first replicator of the embodiment of Figure 8. The skilled reader will appreciate that a top view of the first replicator of the embodiment of Figure 7 would be the same. Thus, Figure 9 shows the substantially planar configuration (in a plane in the first and third dimensions) of the first replicator in the plane of the drawing. The substantially planar configuration is broadly in the plane of propagation of both the input light and the pupil replicas formed by first replicator. In the illustrated arrangement, the pair of first elongated waveguides 800, 800' is arranged in a V-shaped configuration substantially in the plane of the first and third dimensions. The input light beam is incident in a direction parallel to the third dimension (illustrated as the z dimension). Accordingly, the angle of the V-shaped configuration is selected so that, for each waveguide 800, 800', the input light beam is incident at an angle at the parallel reflective surfaces for waveguiding and replica formation. Furthermore, by arranging the pair of waveguides 800, 800' substantially in the plane in the first and second dimensions at an angle with respect to each other - in a substantially planar V-shaped configuration - and providing an input light beam parallel to the third dimension, the first replicator is more compact in the first dimension.

As described above with reference to Figure 8, the first/input ends of the pair of first waveguides 800, 800' - at the centre of the first replicator - are offset or stacked in the second dimension. Thus, neither of the first/input ends of the pair of first waveguides 800, 800', and their respective input ports, is in the shadow of the other due to the overlap in the first dimension. In the illustrated arrangement, the input ends of the first waveguides 800, 800' are arranged to receive separate input beams 950, 950' through respective input ports in their otherwise fully reflective surfaces of their respective pairs of parallel reflective surfaces. Each input beam 950, 950' has an optical path parallel to the third dimension (illustrated as the z or z' dimension). Accordingly, one waveguide 800 of the pair of first waveguides 800, 800' receives a first input light beam 950 at its input/proximal end, and forms an array of replicas R1 to Rn extending in a first direction of the first dimension (illustrated as the x or x' dimension) that are output in the third dimension (illustrated as the z or z' dimension) from the output port comprising the (partially) reflective-transmissive surface of the pair of parallel reflective surfaces along the length of the waveguide 800 to the output/distal end. Similarly, the other waveguide 800' of the pair of first waveguides 800, 800' receives a second input light beam 950' at its input/proximal end, and forms an array of replicas R1' to Rn' extending in a second direction of the first dimension that are output in the third dimension from the output port along the length of the waveguide 800' to the output/distal end. As the skilled reader will appreciate, the pair of arrays of replicas R1 to Rn, R1' to Rn' formed by respective first waveguides 800, 800' of the first replicator have parallel optical paths (but offset in the second dimension) that are in the same direction as the optical path of the input beams 950, 950' - the exit pupil of the (or each) display device or system providing the input beams 950, 950' has been expanded in the first dimension.

Additionally, as described above with reference to Figure 8, the first/input ends of the pair of first waveguides 800, 800' (partially) overlap in the first dimension. In consequence, as shown in Figure 9, the replicas R1, R1' formed by respective ones of the pair of first waveguides 800, 800' also (partially) overlap in the first dimension.

Figure 10A shows an example of the pair of one-dimensional arrays of replicas R1 to Rn, R1' to Rn', which are formed by the pair of first waveguides 800, 800' of the first replicator, in accordance with the embodiment of Figure 8. Figure 10B shows the partial overlap of the replicas of Figure 10A in more detail.

As shown in Figure 10A, each array of replicas R1 to Rn, R1' to Rn' formed by the respective waveguides of the pair of first waveguides 800, 800' extends in the modified/tilted first dimension (illustrated as the x' dimension) and thus substantially in the first dimension (illustrated as the x dimension). In some embodiments, each replica is effectively a replica of a hologram displayed on a display device. As the skilled reader will understand, in some embodiments, each replica replicates a pupil of the display device. As described previously, the input light beam to the first replicator is provided by a relatively small display device (e.g. LCoS) in comparison to the projection distance, and, thus, has a very small pupil. Each replica shown in Figure 10A is a rectangular area - having length a and width b as shown in Figure 10B - which, in embodiments, corresponds to the dimensions of the display device.

Since the first/input ends 801, 801' of the pair of first waveguides 800, 800' are offset or stacked in the second dimension (illustrated as the y' dimension), the respective arrays of replicas R1 to Rn, R1' to Rn' formed by the first replicator are offset from each other in the second dimension. This is shown in Figure 10B as an offset/displacement Δy' between replicas R1, R1' in the second dimension. In some embodiments, Δy' is zero. In addition, due to the global tilt angle θ of the pair of first waveguides 800, 800' in the embodiment of Figure 8, the arrays of replicas R1 to Rn, R1' to Rn' are also tilted by global tilt angle θ relative to the first dimension (illustrated as the x dimension of the (original/unmodified) coordinate system). In consequence, if the one-dimensional arrays of replicas are propagated to the eye-box, they may appear to the viewer as tilted relative to the first dimension (e.g. horizontal dimension). Accordingly, as the skilled reader will appreciate, the tilt may be corrected - so that the arrays of replicas R1 to Rn, R1' to Rn' extend in the first dimension at the eye-box - using known techniques, such as by adjusting the image content of the input light beam to correct for the tilt, or providing a counter tilt in the entire display system when installed *in situ.*

Since the first/input ends of the pair of first waveguides 800, 800' overlap in the first dimension (illustrated as the x' dimension), the two arrays of replicas formed also overlap in the first dimension. In particular, as shown in Figure 10B, the first replicas R1, R1' overlap by a displacement Δx' in the first dimension. In other examples, the overlap/displacement Δx' may comprise the whole length a of a single replica so that the first replicas R1, R1' fully overlap in the first dimension. In further examples, the overlap/displacement Δx' may be greater than one replica, such as to extend over second replicas R2, R2' and optionally third replicas R3, R3' of the arrays of replicas (i.e., Δx' > a, such as between 2a and 3a).

The inventors have surprising found that overlapping the two arrays of replicas improves the viewing experience at the eye-box, in particular although not exclusively, when the input beams(s) carry (or are encoded with) a hologram having angular content/channels. In particular, when a viewer's eye is positioned within the eye-box where the arrays overlap, the quality of the perceived image is improved.

A first replicator in accordance with embodiments may be implemented in a system comprising two replicators arranged for expanding/replicating an input light beam in two dimensions, for example as described above with reference to Figures 5A or 5B. In particular, a second replicator comprising a waveguide having a pair of substantially rectangular (e.g. square) parallel reflective surfaces may be arranged to receive the one-dimensional array of replicas from the first replicator as input light beams. For example, the second replicator may comprise a solid planar rectangular waveguide 540 as in the system of Figure 5B. The second replicator is arranged to provide pupil expansion of the one-dimensional array of replicas/light beams in a second direction, substantially orthogonal to the first direction. Thus, the second replicator forms a two-dimensional array of replicas, which are propagated to the eye-box of a display system.

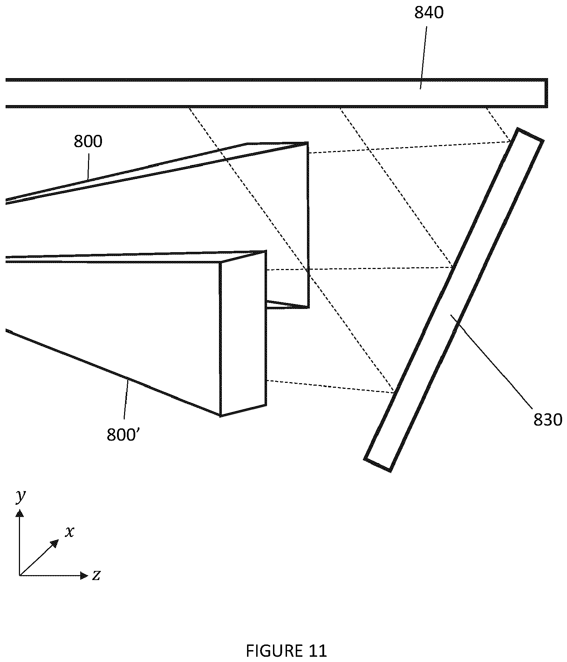

Figure 11 illustrates an example system comprising the first replicator of the embodiment of Figure 8 and a second replicator 840 in an arrangement in accordance with the system of Figure 5B. The first replicator comprises a pair of solid elongated waveguides 800, 800' arranged in a substantially planar configuration for expanding a pupil in the first dimension, as described above. Figure 11 shows only the output ends of the pair of first waveguides 800, 800', for ease of illustration. The system further comprises a second waveguide 840 for expanding the pupil(s) in the second dimension. The second waveguide comprises a solid substantially planar rectangular waveguide 840, in which the major opposing surfaces - which form the pair of parallel reflective surfaces of the waveguide - are parallel to the plane of the first replicator, and thus in a plane of the first and third dimensions (illustrated as an x-z plane). As described above, the replicas R1 to Rn, R1' to Rn' formed by the pair of first waveguides 800, 800' are output by the first replicator in the direction of the third dimension (illustrated as the z dimension). Accordingly, the system further comprises an optical element, illustrated as a planar/fold mirror 830, arranged to fold or turn the optical path of the output light comprising a one-dimensional array of replicas - as shown by example dashed lines - so as to optically couple the array of replicas/light beams into an input port of the waveguide 840 at an angle for waveguiding and replica formation in the second dimension.

Thus, the example system has a generally planar arrangement that extends substantially in a plane in the first and third dimensions and has a height in the second dimension. It may be said that the system occupies, or is located within, stacked first and second planar layers, as described herein). Since the height is minimised - by reducing the maximum size/height of the first replicator in the second dimension - a more compact arrangement is provided that can be accommodated in less space than prior arrangements for providing an equivalent amount of two-dimensional pupil expansion to meet field of view and eye-box size requirements. Notably, the mirror planar/fold 830 contributes to the overall compactness of the system by enabling the input and replica beams of the first replicator to propagate substantially parallel to the plane of the second replicator instead of substantially orthogonally as in the system of Figure 5A, for example.

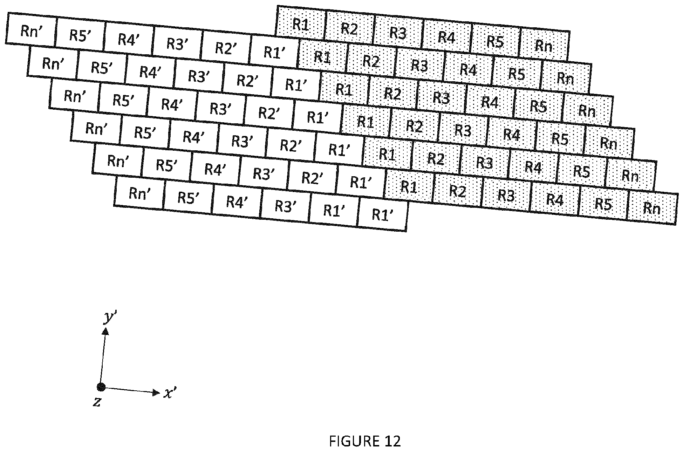

Figure 12 illustrates the two-dimensional array of replicas formed at the output port of the second replicator 840 of the system of Figure 11, which may be propagated to, and viewed at, an eye-box of the display system. Notably, the first replicator expands the exit pupil in the horizontal dimension of the eye-box and the second replicator expands the exit pupil in the vertical direction. Thus, the two one-dimensional arrays of replicas R1 to Rn, R1' to Rn' formed by the respective waveguides 800, 800' of the first replicator extend in the horizontal dimension of the eye-box. In the illustrated example, the offset/displacement Δy' - in the second dimension - between the two arrays of replicas R1 to Rn, R1' to Rn' formed by the first replicator substantially corresponds to the spacing between replicas formed by the second replicator 840 in the second dimension (e.g. corresponding to the replica width b). Thus, a pattern (in some cases, a substantially seamless pattern) of replicas is formed in the second dimension (i.e. at different vertical positions within the eye-box.

As shown in Figure 12, the array of replicas R1 to Rn formed by one first waveguide 800 are viewable (with one or both eyes) at the right side of the eye-box and the array of replicas R1' to Rn' formed by the other first waveguide 800' are viewable (with one or both eyes) at the left side of the eye-box. Both arrays of replicas R1 to Rn, R1' to Rn' are viewable (with respective left and right eyes) from the centre of the eye-box. The dividing boundary between the two arrays of replicas R1 to Rn, R1' to Rn' is staggered or stepped due to the overlap of the input ends of the pair of first waveguides 800, 800', as described above. As the skilled reader will appreciate, this stepped boundary may be moved to the left or right half of the eye-box, based on application requirements, by changing the amount and direction of overlap in the first dimension.

The system comprising the first replicator in accordance with embodiments may be used in a holographic head-up display, as described herein. In some arrangements, light encoded with a hologram, such as a hologram comprising angular channels/content as described above with reference to Figures 2-4, or an image may be input into the replicator system to provide two-dimensional pupil expansion/replication. In some embodiments, the input light beams to the pair of first waveguides 800, 800' may be the same (e.g. may be provided by the same display device or system). Thus, in examples that use a hologram comprising angular channels/content, the input beam to both first waveguides 800, 800' may carry all the angular channels/content in the horizontal and vertical directions. In other embodiments, the input light beams to the pair of first waveguides 800, 800' may be different (e.g. may be provided by respective/different display devices or systems). Thus, in examples, the input beams 950, 950' may carry different image content. For instance, the input beam 950 to the one first waveguide 800 may carry a hologram or image for the right eye and the input beam 950' to the other first waveguide 800' may carry a hologram or image for the left eye. Thus, the input beam 950 to the one first waveguide 800 may be received from a first/right eye display system and the input beam 950' to the other first waveguide 800' may be received from a second/left eye display system.

In examples that use a hologram comprising angular channels/content, the input beam 950 to the one first waveguide 800 may carry a first hologram comprising angular channels/content on the right side of the field of view in the horizontal direction (e.g., 0° to +5° of the horizontal field of view), and the input beam 950' other first waveguide 800' may carry a second hologram comprising angular channels/content on the left side of the field of view in the horizontal direction (e.g., 0° to -5° of the horizontal field of view). Notably, in such examples, the full angular content in the horizontal direction is viewable from an area around the centre of the eye-box (horizontally) so that the full field of view (e.g., -5° to +5°) may be seen by a viewer at the eye-box using one eye. In particular, a single eye at the very centre (i.e. 0 degrees) of the eye-box, may receive light rays for the full field of view (i.e. both holograms). Accordingly, for eye-box positions near the centre (i.e. 0 degrees horizontally), one eye may receive light rays of the first hologram from the array of replicas formed by one of the first waveguides (e.g. corresponding to the angular channels on the left side of the field of view) and the other eye may receive light rays of the second hologram from the array of replicas formed by the other one of the first waveguides (e.g. corresponding to the angular channels on the right side of the field of view). As the skilled reader will appreciate, this effect holds until the viewer moves to an eye-box position that is so far from the centre (at 0 degrees) that both eyes can only receive light rays from the same array of replicas, and thus from the same first waveguide, such that both eyes receive light rays of the same hologram. Accordingly, the amount of overlap of the arrays of replicas R1 to Rn and R1' to Rn' in the first dimension (e.g. horizontal dimension) may be chosen, according to application requirements, so as to optimise the viewing experience at the eye-box.

In other arrangements, a holographic reconstruction (or "replay image") of a hologram may be formed, and light of the holographic reconstruction or image may be input into the replicator system to provide two-dimensional pupil expansion. The input light beams 950, 950' to the pair of first waveguides 800, 800' may be the same or different, as described above.

In some embodiments, the input port (or "entrance aperture") of at least the second waveguide 840, and optionally the pair of first waveguides 800, 800', comprises a (partially) transmissive-reflective element instead of being fully transmissive. In particular, the input port is formed in one of the pair of parallel reflective surfaces of the respective waveguide 840, such as the fully reflective surface thereof. The transmissive-reflective element at the input port is arranged to receive and partially transmit input light, and to partially reflect the light within the waveguide. Examples of suitable transmissive-reflective elements for the input port of a waveguide are described in co-pending UK patent application 2118613.5 of 21 December 2021, which is incorporated herein by reference.

As described in co-pending UK patent application 2118613.5, the use of a partially transmissive-partially reflective input port of the waveguide enables in-coupling and trapping of *all* rays of a divergent ray bundle incident on the input port. Thus, in implementations comprising holograms having a plurality of angular channels, this allows light representing *all* the different angular components to be coupled in, and then trapped inside, the waveguide. As described in UK patent application 2118613.5, the transmissive-reflective element may be graded in the direction of pupil expansion, in order to retain more angular content. However, due to the reduced "height" (in the second dimension) of the pair of first waveguides 800, 800' forming the first replicator according to embodiments, the required input port window for coupling the one-dimensional arrays of replicas R1 to Rn, R1' to Rn' into the second waveguide 840 is reduced. Thus, a smaller input port (i.e. shorter - in the second dimension) is required for the second waveguide 840 than would be required for a single waveguide, leading to improved optical in-coupling efficiency into the second waveguide. There is therefore synergy between UK patent application 2118613.5 and the present disclosure.

There is disclosed herein a system that forms an image using diffracted light and provides an eye-box size and field of view suitable for real-world application - e.g. in the automotive industry by way of a head-up display. The diffracted light is light forming a holographic reconstruction of the image from a diffractive structure - e.g. hologram such as a Fourier or Fresnel hologram. The use of diffraction and a diffractive structure necessitates a display device with a high density of very small pixels (e.g. 1 micrometer) - which, in practice, means a small display device (e.g. 1 cm). The inventors have addressed a problem of how to provide 2D pupil expansion with a diffracted light field e.g. diffracted light comprising diverging (not collimated) ray bundles.

In aspects, the display system comprises a display device - such as a pixelated display device, for example a spatial light modulator (SLM) or Liquid Crystal on Silicon (LCoS) SLM - which is arranged to provide or form the diffracted or diverging light. In such aspects, the aperture of the spatial light modulator (SLM) is a limiting aperture of the system. That is, the aperture of the spatial light modulator - more specifically, the size of the area delimiting the array of light modulating pixels comprised within the SLM - determines the size (e.g. spatial extent) of the light ray bundle that can exit the system. In accordance with this disclosure, it is stated that the exit pupil of the system is expanded to reflect that the exit pupil of the system (that is limited by the small display device having a pixel size for light diffraction) is made larger or bigger or greater in spatial extend by the use of at least one pupil expander.

### Additional features

The methods and processes described herein may be embodied on a computer-readable medium. The term "computer-readable medium" includes a medium arranged to store data temporarily or permanently such as random-access memory (RAM), read-only memory (ROM), buffer memory, flash memory, and cache memory. The term "computer-readable medium" shall also be taken to include any medium, or combination of multiple media, that is capable of storing instructions for execution by a machine such that the instructions, when executed by one or more processors, cause the machine to perform any one or more of the methodologies described herein, in whole or in part.

The term "computer-readable medium" also encompasses cloud-based storage systems. The term "computer-readable medium" includes, but is not limited to, one or more tangible and non-transitory data repositories (e.g., data volumes) in the example form of a solid-state memory chip, an optical disc, a magnetic disc, or any suitable combination thereof. In some example embodiments, the instructions for execution may be communicated by a carrier medium. Examples of such a carrier medium include a transient medium (e.g., a propagating signal that communicates instructions).

It will be apparent to those skilled in the art that various modifications and variations can be made without departing from the scope of the appended claims. The present disclosure covers all modifications and variations within the scope of the appended claims and their equivalents.

## Claims

1. A pupil expander for a head-up display, wherein the head-up display has an eye-box having a first dimension and second dimension, wherein the pupil expander comprises:
a pair of first waveguides each arranged to replicate a pupil in the first dimension of the eye-box, wherein each waveguide is elongated and tapered in the direction of elongation such that its input end is narrower than its output end, and
wherein the first waveguides are arranged so that their input ends are substantially proximate each other and their respective output ends are substantially distal from each other.

2. A pupil expander as claimed in claim 1 wherein the first waveguides are arranged to provide pupil expansion in opposite directions of the first dimension.

3. A pupil expander as claimed in claim 1 or 2 wherein each of the first waveguides has substantially the same length.

4. A pupil expander as claimed in claim 1, 2 or 3 wherein the first waveguides are arranged in a substantially planar configuration.

5. A pupil expander as claimed in claim 4 wherein the substantially planar configuration is in the plane of propagation of pupil replicas formed by the pair of first waveguides and / or wherein the pair of first waveguides is tilted in order to reduce a size of the substantially planar configuration in the second dimension.

6. A pupil expander as claimed in any preceding claim wherein the pair of first waveguides are arranged in a configuration in which they are tapered in the same direction.

7. A pupil expander as claimed in any preceding claim wherein the input ends of the pair of first waveguides partially overlap in the first dimension, optionally wherein an amount of the overlap in the first dimension is less that the size of a replica in the first dimension.

8. A pupil expander as claimed in any preceding claim wherein the input ends of the pair of first waveguides are offset in the second dimension, optionally wherein the offset is such that the output ends of the pair of first waveguides partially overlap in the second dimension.

9. A pupil expander as claimed in any preceding claim wherein the input ports of the pair of first waveguides are spatially separated in the second dimension.

10. A pupil expander as claimed in any preceding claim further comprising a second waveguide arranged to replicate the pupil in the second dimension of the eye-box, wherein the pair of first waveguides are optically coupled to the second waveguide; optionally further comprising an optical element, optionally a planar/fold mirror, arranged to optically couple the output light of the first pair of waveguides into the second waveguide.

11. A pupil expander as claimed in any preceding claim wherein the pair of first waveguides are arranged in a substantially planar configuration that is substantially parallel to a plane of the second waveguide.

12. A pupil expander as claimed in claim 10 or 11 wherein an input port to the second waveguide comprises a partially transmissive-partially reflective element, such as a partially transmissive-partially reflective surface, optionally a graded partially transmissive-partially reflective surface.

13. A pupil expander as claimed in any preceding claim wherein each first waveguide comprises a pair of parallel reflective surfaces comprising a first substantially reflective surface and a second partially reflective-transmissive surface, arranged to provide waveguiding of input light therebetween.

14. A pupil expander as claimed in any preceding claim wherein the input end of one first waveguide comprises an input port for a first display system and the input end of the other first waveguide comprises an input port for a second display system; and / or wherein the input light to at least one of the pair of first waveguides comprises diverging light, for example a diffracted light field comprising diverging ray bundles.

15. A head-up display comprising a pupil expander as claimed in any preceding claim.
